(19) Europäisches Patentamt
European Patent Office
Office européen des brevets

(11) **EP 2 866 340 A1**

(12) **EUROPÄISCHE PATENTANMELDUNG**

(43) Veröffentlichungstag:
**29.04.2015 Patentblatt 2015/18**

(51) Int Cl.:
*H02M 3/00* (2006.01)  *H01F 27/40* (2006.01)
*H02M 1/00* (2007.01)  *H02M 3/28* (2006.01)

(21) Anmeldenummer: **13190532.5**

(22) Anmeldetag: **28.10.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Scharf, Alexander**
**76870 Kandel (DE)**

(54) **Schaltungsanordnung mit zwei parallelgeschalteten Dioden**

(57)   Die Erfindung betrifft eine Schaltungsanordnung mit zwei parallelgeschalteten Dioden (D1, D2), welche zum Gleichrichten eines Eingangsstroms (I) vorgesehen sind. Um eine im Wesentlichen symmetrische Aufteilung des Eingangsstroms (I) auf die parallelgeschalteten Dioden (D1, D2) zu ermöglichen ist vorgesehen, dass einer dieser Dioden (D1, D2) eine Primärwicklung (6) eines Übertragers (5) und der anderen Diode (D1, D2) eine Sekundärwicklung (7) dieses Übertragers (5) vor- oder nachgeschaltet ist, wobei die Windungszahl der Primärwicklung (6) gleich der Windungszahl der Sekundärwicklung (7) ist und wobei die Primär- und Sekundärwicklung (6, 7) gegensinnig gekoppelt sind.

FIG 1

**Beschreibung**

Die Erfindung betrifft eine Schaltungsanordnung mit zwei parallelgeschalteten Dioden, welche zum Gleichrichten eines Eingangsstroms vorgesehen sind. Darüber hinaus betrifft die Erfindung ein Schaltnetzteil mit einer derartigen Schaltungsanordnung.

Gewöhnlich ist zum Gleichrichten eines Wechselstroms eine Diode vorgesehen, welche je nach erforderlicher Leistungsabgabe bzw. je nach Höhe eines erforderlichen Laststroms geeignet dimensioniert sein muss, wobei es allerdings vorkommen kann, dass eine für hohe Leistungsabgaben ausgelegte Diode, z. B. eine Diode in einem Schaltnetzteil, eine hohe Verlustleistung und eine erhöhte Abwärme bewirken kann.

Um eine hohe Verlustleistung bzw. eine erhöhte Abwärme zu vermeiden bzw. zu vermindern, sind geeignete Maßnahmen vorzusehen. Beispielsweise wird in einem Schaltnetzteil zu der Diode eine weitere Diode parallelgeschaltet, wodurch der gleichzurichtende Eingangsstrom sich über die Parallelverzweigung aufteilt und wodurch die Verlustleistung sowie die Abwärme vermindert wird. Aufgrund von Toleranzen der eingesetzten Dioden und der Temperaturabhängigkeit der Fluss- bzw. Durchlassspannung der jeweiligen Diode kann es allerdings zu einer ungünstigen Aufteilung des Eingangsstroms kommen. Im ungünstigsten Fall fließt der gesamte Eingangsstrom über die Diode mit der geringeren Flussspannung, dagegen fließt über die Diode mit der höheren Flussspannung kein Strom. Dies bedeutet, dass trotz der parallelgeschalteten Dioden weder eine höhere Leistungsabgabe bzw. Leistungserhöhung noch eine geringe Abwärme erzielt werden. Für eine ausreichende Wärmeabfuhr ist daher eine geeignete Kühlfläche erforderlich.

Der Erfindung liegt daher die Aufgabe zugrunde, eine Schaltungsanordnung der eingangs genannten Art zu schaffen, mittels welcher eine im Wesentlichen symmetrische Aufteilung des Eingangsstroms auf die parallelgeschalteten Dioden ermöglicht wird. Darüber hinaus ist ein Schaltnetzteil mit einem Sperrwandler und einer derartigen Schaltungsanordnung anzugeben.

Diese Aufgabe wird bezüglich der Schaltungsanordnung dadurch gelöst, dass einer dieser Dioden eine Primärwicklung eines Übertragers und der anderen Diode eine Sekundärwicklung dieses Übertragers vor- oder nachgeschaltet ist, wobei die Windungszahl der Primärwicklung gleich der Windungszahl der Sekundärwicklung ist und wobei die Primär- und Sekundärwicklung gegensinnig gekoppelt sind. Im Hinblick auf das Schaltnetzteil wird diese Aufgabe durch die im Anspruch 2 angegebenen Maßnahmen gelöst.

Vorteilhaft ist, dass aufgrund der im Wesentlichen symmetrischen Aufteilung des Eingangsstroms - und somit der Aufteilung der Verlustleistung - auf zwei Dioden aufwendige Maßnahmen bezüglich der Wärmeabfuhr vermindert werden, z. B. bezüglich der Wärmeabfuhr auf einer mit den Dioden und weiteren Bauelementen bestückten Leiterplatte. Ferner können preisgünstige Dioden eingesetzt werden, was bedeutet, dass auf einen Einsatz von teuren Leistungsdioden verzichtet werden kann. Darüber hinaus wird der Temperaturdrift kompensiert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen

Figur 1 Bestandteile eines Schaltnetzteils und,
Figur 2 Strom- und Spannungsverläufe.

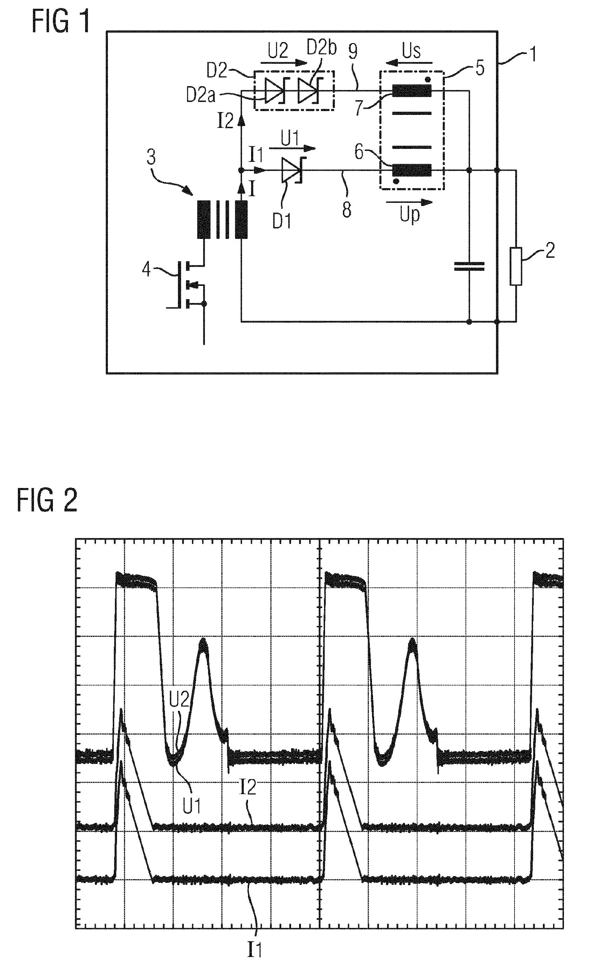

In Figur 1 sind mit 1 Bestandteile eines Schaltnetzteils bezeichnet, welches zur Versorgung einer Last 2 mit einer für die Last 2 geeigneten Gleichspannung vorgesehen ist. Das Schaltnetzteil weist zur galvanischen Trennung einen Sperrwandler 3 auf, der zusammen mit einem steuerbaren Schalter 4 eine getaktete Übertragung der Energie von der Primärseite des Sperrwandlers 3 zu dessen Sekundärseite bewerkstelligt, wobei eine Schaltungsanordnung einen auf dieser Sekundärseite des Sperrwandlers 3 fließenden Wechselstrom I gleichrichtet. Diese Schaltungsanordnung ist mit einer ersten Diode D1, mit einer zu dieser ersten Diode D1 parallelgeschalteten zweiten Diode D2 und einem Übertrager 5 versehen, dessen Primärwicklung 6 an die Kathode der Diode D1 und dessen Sekundärwicklung 7 an die Kathode der Diode D2 angeschlossen ist. Im vorliegenden Ausführungsbeispiel sind die Wicklungen 6, 7 des Übertragers 5 den Dioden D1, D2 nachgeschaltet. Selbstverständlich können diese Wicklungen auch den Dioden D1, D2 vorgeschaltet sein, was bedeutet, dass die Wicklungen 6, 7 an die jeweilige Anode der Dioden D1, D2 angeschlossen ist. Ferner ist es möglich, die erste Diode D1 an die Sekundärwicklung 7 und die zweite Diode D2 an die Primärwicklung 6 anzuschließen. Um sicherzustellen, dass der Wechselstrom (Eingangsstrom I) unabhängig von Flussspannungen U1, U2 der Dioden D1, D2 im Wesentlichen symmetrisch in der Parallelverzweigung aufgeteilt wird, was bedeutet, dass in jedem der beiden Zweige 8, 9 ein Teilstrom I1, I2 fließt, wobei I1 = I2 und I = I1+I2 ist, ist es erforderlich, dass einerseits die Windungszahl der Primärwicklung 6 gleich der Windungszahl der Sekundärwicklung 7 ist und andererseits die Primär- und Sekundärwicklung 6, 7 gegensinnig gekoppelt sind.

Im vorliegenden Ausführungsbeispiel wird angenommen, dass die Flussspannung U2 der zweiten Diode D2 größer ist als die Flussspannung U1 der ersten Diode D1, was in der Zeichnung mittels Dioden D2a, D2b veranschaulicht ist, welche die zweite Diode D2 repräsentieren. Der Übertrager 5 "symmetriert" die Teilströme I1, I2, indem dieser (Symmetrie-) Übertrager 5 die unterschiedlichen Flussspannungen U1, U2 der Dioden D1, D2 ausgleicht. Über der Primärwicklung 6 des Übertragers 5 im Zweig 8 fällt eine Spannung Up ab, welche aufgrund der gegensinnigen Kopplung der Wicklungen 6, 7 eine entgegengesetzte Spannung Us im Zweig 9 induziert. Entsprechend fällt über die Sekundärwicklung 7 im Zweig 9 eine Spannung ab, welche im Zweig 8 eine entgegengesetzte Spannung induziert. Diese induzierten Spannungen sind identisch, weil aufgrund der identischen Windungszahlen der Wicklungen 6, 7 die Teilströme I1, I2 annähernd gleich sind; denn es gilt allgemein für den Fall, dass die Streuinduktivität vernachlässigt wird

$$I1 \times N1 = I2 \times N2,$$

wobei
N1 die Wicklungszahl der Primärwicklung 6,
N2 die Wicklungszahl der Sekundärwicklung 7 und ferner N1 = N2 ist.

Der Spannungsabfall über den jeweiligen Zweig 8, 9 ist das arithmetische Mittel der beiden Flussspannungen U1, U2 der Dioden D1, D2.

Figur 2 zeigt aufgezeichnete Spannungs- und Stromverläufe der Spannungen U1, U2 und der Ströme I1, I2 gemäß Figur 1, wobei die Stromverläufe zur besseren Darstellung vertikal zueinander verschoben sind. Der Strom I wird aufgrund der Schaltungsanordnung im Wesentlichen symmetrisch aufgeteilt, wobei die Teilströme I1, I2 sich nur marginal unterscheiden, dagegen die Spannungen U1, U2 aufgrund der unterschiedlichen Flussspannungen verschieden sind.

**Patentansprüche**

1.  Schaltungsanordnung mit zwei parallelgeschalteten Dioden (D1, D2), welche zum Gleichrichten eines Eingangsstroms (I) vorgesehen sind, **dadurch gekennzeichnet, dass** einer dieser Dioden (D1) eine Primärwicklung (6) eines Übertragers (5) und der anderen Diode (D2) eine Sekundärwicklung (7) dieses Übertragers (5) vor- oder nachgeschaltet ist, wobei die Windungszahl der Primärwicklung (6) gleich der Windungszahl der Sekundärwicklung (7) ist und wobei die Primär- und Sekundärwicklung (6, 7) gegensinnig gekoppelt sind.

2.  Schaltnetzteil mit einem Sperrwandler (3) und einer an eine Sekundärwicklung des Sperrwandlers (3) angeschlossenen Schaltungsanordnung nach Anspruch 1.

**FIG 1**

**FIG 2**

Europäisches
Patentamt

European
Patent Office

Office européen
des brevets

**EUROPÄISCHER RECHERCHENBERICHT**

**Nummer der Anmeldung**

EP 13 19 0532

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 041632 A1 (OSRAM GMBH [DE]) 29. März 2012 (2012-03-29) * Absätze [0037], [0156], [0192], [0240], [0242]; Abbildungen 1,2,13,20,21,52 * ----- | 1,2 | INV. H02M3/00 H01F27/40 H02M1/00 H02M3/28 |
| X | DE 198 04 623 A1 (SIEMENS AG [DE]) 7. Januar 1999 (1999-01-07) * Spalte 2, Zeilen 41-47; Abbildungen 4,5 * ----- | 1 | |
| X | DE 198 51 712 A1 (TAVANA NEJAD PASCHA [DE] TAVANA-NEJAD PASCHA [DE]) 4. Mai 2000 (2000-05-04) * Spalte 4, Zeilen 27-44; Abbildungen 6,8 * ----- | 1 | |

| RECHERCHIERTE SACHGEBIETE (IPC) |
|---|
| H02M H01F |

Der vorliegende Recherchenbericht wurde für alle Patentansprüche erstellt

| Recherchenort | Abschlußdatum der Recherche | Prüfer |
|---|---|---|
| Den Haag | 3. Januar 2014 | Kanelis, Konstantin |

EPO FORM 1503 03.82 (P04C03)

**EP 2 866 340 A1**

**ANHANG ZUM EUROPÄISCHEN RECHERCHENBERICHT
ÜBER DIE EUROPÄISCHE PATENTANMELDUNG NR.**

EP 13 19 0532

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-01-2014

| Im Recherchenbericht angeführtes Patentdokument | Datum der Veröffentlichung | Mitglied(er) der Patentfamilie | Datum der Veröffentlichung |
|---|---|---|---|
| DE 102010041632 A1 | 29-03-2012 | CN 103155703 A<br>DE 102010041632 A1<br>EP 2526738 A1<br>US 2013187561 A1<br>WO 2012041783 A1 | 12-06-2013<br>29-03-2012<br>28-11-2012<br>25-07-2013<br>05-04-2012 |
| DE 19804623 A1 | 07-01-1999 | KEINE | |
| DE 19851712 A1 | 04-05-2000 | KEINE | |

EPO FORM P0461

Für nähere Einzelheiten zu diesem Anhang : siehe Amtsblatt des Europäischen Patentamts, Nr.12/82